**Europäisches Patentamt**

**European Patent Office**

**Office européen des brevets**

(19)

(11) Veröffentlichungsnummer: **0 047 981**
**B1**

(12)

# EUROPÄISCHE PATENTSCHRIFT

(45) Veröffentlichungstag der Patentschrift:
27.12.84

(21) Anmeldenummer: 81107122.4

(22) Anmeldetag: 10.09.81

(51) Int. Cl.³: **A 01 B 49/06,** A 01 C 5/06

(54) **Kornsämaschine mit Walzen-Packer.**

(30) Priorität: **11.09.80 DE 3034216**

(43) Veröffentlichungstag der Anmeldung:
**24.03.82 Patentblatt 82/12**

(45) Bekanntmachung des Hinweises auf die Patenterteilung:
**27.12.84 Patentblatt 84/52**

(84) Benannte Vertragsstaaten:
**AT BE CH FR GB LI NL**

(56) Entgegenhaltungen:
**DE - A - 1 457 824**
**DE - A - 2 016 231**
**DE - U - 7 434 244**
**US - A - 1 829 605**
**US - A - 3 682 252**

(73) Patentinhaber: **Gebr. Köckerling, Lindenstrasse 11,**
**D-4837 Verl (DE)**

(72) Erfinder: **Köckerling, Heinrich, Poststrasse 11,**
**D-4837 Verl (DE)**
Erfinder: **Köckerling, Martin, Poststrasse 11, D-4837 Verl**
**(DE)**

(74) Vertreter: **Hoefer, Theodor, Dipl.-Ing., Kreuzstrasse 32,**
**D-4800 Bielefeld 1 (DE)**

ACTORUM AG

## Beschreibung

Die Erfindung betrifft eine Kornsämaschine mit Walzen-Packer, der eine in einem Rahmengestell aufgehangene und aus einem angetriebenen zylindrischen Walzenkörper mit darauf nebeneinander angeordneten Packerringen bestehende Rillenwalze besitzt.

Bei einer solchen bekannten Kornsämaschine (DE–Offenlegungsschrift 2 016 231) liegt die Aufgabe der mit den Packerringen versehenen Rillenwalze darin, die für das Saatgut erforderlichen Rillen in den vorher aufgelockerten Boden zu ziehen und dabei gleichzeitig den Untergrund dieses Bodens entsprechend zu verdichten. Die Achse der Rillenwalze ist an einem ihrer Enden mit einem Antriebszahnrad ausgestattet, welches mit einem über Nocken- oder Reibräder an einer mit der Säwelle bewegungsstarr befestigten Antriebsscheibe bewegungsmässig verbundenen Übertragungszahnrad kämmt. Der in Trichterform oder ähnlich ausgebildete Saatgutbehälter mit unten liegendem Auslauftrichter liegt oberhalb des Rahmengestells und wird von diesem getragen.

Aus der US-Patentschrift 1 829 605 ist ein Gerät bekannt, welches eine in einem Rahmengestell aufgehangene und aus einem Walzenkörper mit darauf nebeneinander angeordneten Ringen bestehende Rillenwalze besitzt, wobei jeder der Ringe von Ringsegmenten gebildet ist und für deren lösbare Befestigung an dem Walzenkörper dieser in einer radialen Richtung von ihm abstehende Halteflansche aufweist, die mit darin angebrachten Befestigungsmitteln ausgestattet sind. Kornsämaschinen mit Walzen-Packerringen sind auch aus der US-Patentschrift 3 682 252, dem DE-Gebrauchsmuster 74 34 244 und der DE-Offenlegungsschrift 14 57 824 bekannt.

Bei den bisher bekannten Rillenwalzen sind die Packerringe somit häufig ein fester Bestandteil dieser Walzen. Eine Lös- oder Ablösung von dem Walzenkörper ist hier oft nur unter grossen Schwierigkeiten möglich, wobei Beschädigungen des Walzenkörpers nicht ausgeschlossen sind. Es besteht zwar die Möglichkeit, mit einer beschädigten Rillenwalze weiterzuarbeiten, aber von einer einwandfreien Rillenziehung und Untergrundverdichtung kann dann nicht mehr die Rede sein.

Um einen einwandfreien und reibungslosen Arbeitsablauf beim Sävorgang zu gewährleisten, wäre es von Vorteil, eine solche Verbindung zwischen dem Walzenkörper und den Packerringen zu schaffen, dass immer mit einer Rillenwalze gearbeitet werden kann, die einwandfreie Packerringe aufzeigt.

Aufgabe der Erfindung ist es also, eine Kornsämaschine der eingangs genannten Art dahingehend weiterzubilden, dass deren sogenannte Packereinrichtung über eine Rillenwalze verfügt, die hinsichtlich der Anordnung der Packerringe am Walzenkörper so ausgelegt und aufgebaut ist, dass sie allen an eine Rillenwalze gestellten Anforderungen Rechnung trägt.

Diese Aufgabe wird erfindungsgemäss dadurch gelöst, dass jeder der Packerringe von Ringsegmenten gebildet ist und für deren lösbare Befestigung an dem Walzenkörper dieser eine den Ringsegmenten entsprechende Anzahl in radialer Richtung von ihm abstehender Halteböcke aufweist, die mit einem Innengewinde ausgestattet sind, in das eine mit ihrem Kopf in das jeweilige Ringsegment einleg- bzw. eintauchbare Schraube eingedreht ist.

Der Packerring besteht also aus mehreren Ringsegmenten und auf dem Walzenkörper ist für jedes der Ringsegmente ein Haltebock vorhanden. An einer der Stirnseiten besitzen die Ringsegmente eine um die Materialstärke nach unten und innen gezogene Abkröpfung, während im Bereich der anderen Stirnseite eine Vertiefung für die Aufnahme des Schraubenkopfes angeordnet ist.

Die Halteböcke bestehen vorzugsweise aus Metall, sind in Form von Nocken, Blöcken oder Profilplatten ausgebildet und mit dem Walzenkörper mittels Schweissen o.dgl. zu einer unlösbaren Einheit zusammengesetzt.

Ein weiteres Merkmal gemäss der Erfindung besteht darin, dass auf dem Walzenkörper für die seitliche Führung der einzelnen Ringsegmente dem Querschnitt derselben entsprechend ausgebildete sattelartige Bügel o.dgl. aufgeschweisst sind.

Die segmentartigen Packerringe sind unter Einbeziehung der Halteböcke und Bügel in relativ geringem Abstand zueinander auswechselbar auf dem Walzenkörper aufgeschraubt.

Die beiderseitig an den Packerringen angreifenden Abstreifer sind verhältnismässig hoch, und zwar am oberen Ende der hinteren Schräge des Rahmengestells, befestigt.

Der erfindungsgemässe Gegenstand erlaubt einige Variationen hinsichtlich der Ausbildung der Packerringe die aber den Rahmen der Erfindung nicht überschreiten.

Der Walzenpacker ist einfach aufgebaut und mit geringen Mitteln herstellbar. Da die Packerringe aus mehreren Ringsegmenten gebildet sind und nur eine Schraubbefestigung am Walzenkörper haben, lassen sich beschädigte Ringsegmente schnell und mühelos auswechseln. Die erfindungsgemässe Ausführung wird damit den Anforderungen gerecht, die von den landwirtschaftlichen Betrieben gestellt werden. Infolge der auswechselbaren Befestigung der Ringsegmente der einzelnen Packerringe hat die Rillenwalze eine lange Lebensdauer.

Die Kornsämaschine ist in vorteilhafter Weise als sogenanntes Nachlaufgerät ausgebildet und wird von einem Zugfahrzeug in der Fahrtrichtung gut arbeitend bewegt. Mit der Kornsämaschine erfährt die landwirtschaftliche Industrie eine spürbare Bereicherung, weil mit derselben eine rationelle Arbeitsweise gegeben ist, und zwar infolge der neuartigen Packerringe.

Ein Ausführungsbeispiel der Erfindung ist in den Zeichnungen dargestellt und wird nachstehend näher erläutert. Es zeigen:

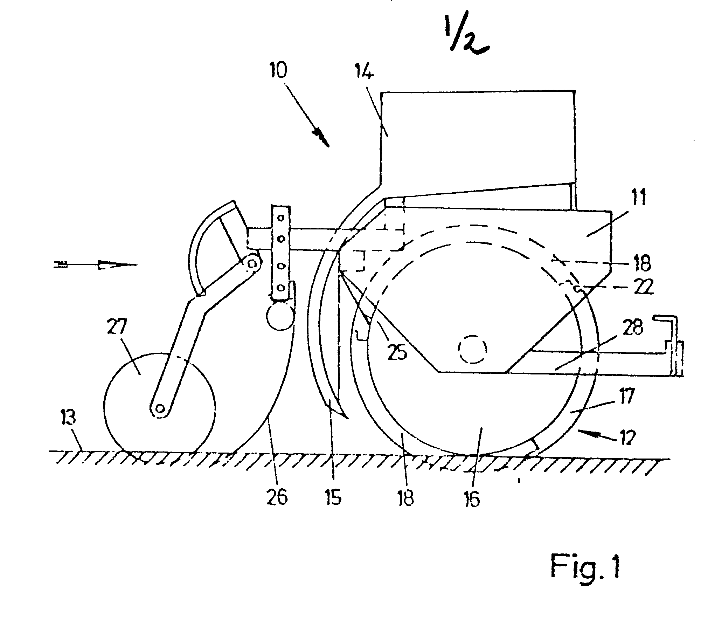

Fig. 1 eine Kornsämaschine in einer Seitenansicht;

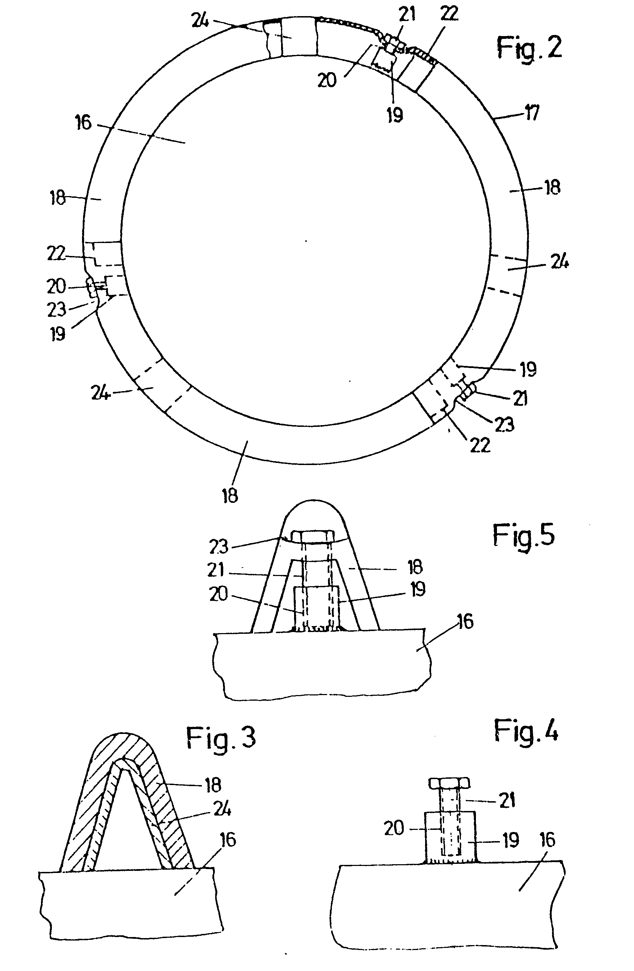

Fig. 2 eine schematische Seitenansicht der Rillenwalze, aus der die Befestigung des Packerringes hervorgeht;

Fig. 3 ein Teilstück des Walzenkörpers mit Längsschnitt durch den Führungsbügel und Ringsegment;

Fig. 4 den Walzenkörper in Teildarstellung mit aufgeschweisstem Haltebock und eingedrehter Schraube und

Fig. 5 das aufgeschraubte Ringsegment in einer schematischen Vorderansicht.

Die Kornsämaschine 10 besitzt in bekannter Weise eine in dem Rahmengestell 11 antreibbar gelagerte Rillenwalze 12 der eingangs genannten Art. Diese Rillenwalze 12 zieht in den zuvor gelockerten Boden 13 die für das Saatgut erforderlichen Rillen und verdichtet gleichzeitig den Bodenuntergrund. Ferner trägt das Rahmengestell 11 einen Vorratsbehälter 14 für das Saatgut, welches über eine Art von Austragrutsche 15 dosiert in die bodenseitigen Rillen gebracht wird.

Die Rillenwalze 12 wird von dem Walzenkörper 16 und den Packerringen 17 gebildet. Diese Packerringe 17 sind nunmehr im Rahmen der Erfindung erstmals aus Ringsegmenten 18 gebildet, die eine lösbare Befestigung zum Walzenkörper 16, im Gegensatz zum Bekannten aufzeigen. Beim Ausführungsbeispiel ist ein Packerring 17 gezeigt, der aus drei Ringsegmenten 18 besteht. Auf dem Walzenkörper 16 der Rillenwalze 12 sind für eine schraubbare Befestigung dieser Ringsegmente 18 entsprechende Halteböcke 19 fest aufgeschweisst, die ein Innengewinde 20 mit eingedrehter Schraube 21 besitzen. Für jedes Ringsegment sind auf dem Walzenkörper 16 jeweils ein Haltebock 19 vorgesehen, so dass beim Ausführungsbeispiel für den dreiteiligen Packerring 17 drei Halteböcke 19 aufgeschweisst sind. Die Halteböcke 19 als solche können als Nocken, Blöcke oder Profilplatten ausgebildet sein, die aus Metall gefertigt sind. Von dem Walzenkörper 16 stehen die Halteböcke 19 in radialer Hinsicht gesehen von diesem ab.

Für eine gute Überlappung zweier Ringsegmente 18 besitzen diese an einer ihrer Stirnseiten eine um die Materialstärke eingezogene Abkröpfung 22, während im gegenüberliegenden Endbereich der Ringsegmente 18 eine Vertiefung 23 vorgesehen ist, in welche sich der Schraubenkopf einlegt bzw. eintaucht.

Damit die den Packerring 17 bildenden Ringsegmente 18 seitlich auf dem Walzenkörper 16 geführt sind, sind in Umlaufrichtung der jeweils um 120° versetzten Halteböcke 19 sattelartige Bügel 24 aufgeschweisst. Diese Bügel 24 sind den Innenabmessungen der Ringsegmente 18 entsprechend gestaltet und bestehen wie die Halteböcke 19 aus einem metallischen Werkstoff. Die Halteböcke 19 und die Bügel 24 sind in bevorzugter Weise so ausgelegt, dass sowohl ein Dehnungsausgleich als auch ein Toleranzausgleich hinsichtlich der vorbeschriebenen Packerringe 17 in jeder Hinsicht gegeben ist.

Die Packerringe 17 unter Einbeziehung der Halteböcke 19 und sattelartigen Bügel 24 sind sehr dicht beieinanderliegend auf dem Walzenkörper 16 schraubbar befestigt, so dass sich Rillen mit geringem Abstand ziehen lassen. Die den Packerring 17 bildenden Ringsegmente 18 sind stumpfwinklig in ihrem Querschnitt, wobei diese Querschnittsform aber auch anders gewählt sein kann.

Mit der erfindungsgemässen Rillenwalze 12, insbesondere aufgrund ihrer auswechselbar auf dem Walzenkörper 16 aufgeschraubten und unterteilten Packerringe 17, ist ein fester Bodenuntergrund für eine gleichmässige Saattiefe gewährleistet. Desweiteren sind die beidseitig an den Packerringen 17 anliegenden Abstreifer 25 bevorzugt hoch an dem Rahmengestell 11 befestigt. Demzufolge gelangt das dosiert aus der Austragrutsche 15 ankommende Saatgut eher in die gezogenen Bodenrillen als das von den Packerringen 17 abgestreifte Erdreich.

In Fahrtrichtung gesehen liegt hinter der Austragrutsche 15 ein nach hinten durchgebogener Striegel 26, der das in den Rillen liegende Saatgut wieder mit Erdreich zudeckt. Hinter dem Striegel 26 befindet sich in bekannter Weise eine gegenüber der Rillenwalze 12 kleinere Druckwalze 27.

Die als Nachläufer ausgebildete Kornsämaschine lässt dich über ein am Rahmengestell 11 angeordnetes Anschlussteil 28 in Deichselform an ein Schlepperfahrzeug anhängen und in Pfeilrichtung verfahren.

**Patentansprüche**

1. Kornsämaschine mit Walzen-Packer, der eine in einem Rahmengestell (11) aufgehangene und aus einem angetriebenen zylindrischen Walzenkörper (16) mit darauf nebeneinander angeordneten Packerringen (17) bestehende Rillenwalze (12) besitzt, dadurch gekennzeichnet, dass jeder der Packerringe (17) von Ringsegmenten (18) gebildet ist und für deren lösbare Befestigung an dem Walzenkörper (16) dieser eine den Ringsegmenten (18) entsprechende Anzahl in radialer Richtung von ihm abstehender Halteböcke (19) aufweist, die mit einem Innengewinde (20) ausgestattet sind, in das eine mit ihrem Kopf in das jeweilige Ringsegment (18) einleg- bzw. eintauchbare Schraube (21) eingedreht ist.

2. Kornsämaschine nach Anspruch 1, dadurch gekennzeichnet, dass auf dem Walzenkörper (16) für jedes Ringsegment (18) ein Haltbock (19) fest angeordnet ist.

3. Kornsämaschine nach Anspruch 1 und 2, dadurch gekennzeichnet, dass die Ringsegmente (18) an einer Stirnseite eine in Materialstärke nach unten und innen gezogene Abkröpfung (22) aufweisen.

4. Kornsämaschine nach den Ansprüchen 1 bis 3, dadurch gekennzeichnet, dass das Ringsegment (18) auf dem der Abkröpfung (22) abgewandten Ende eine Vertiefung (23), in die der Kopf der Schraube (21) sich über der Durchgangsbohrung für dieselbe (21) anlegt, besitzt.

5. Kornsämaschine nach den Ansprüchen 1 bis

4, dadurch gekennzeichnet, dass die Halteböcke (19) aus Metall in Form von Nocken, Blöcken oder Profilplatten ausgebildet sind und mit dem Walzenkörper (16) mittels Schweissen o.dgl. eine unlösbare Einheit bilden.

6. Kornsämaschine nach den Ansprüchen 1 bis 5, dadurch gekennzeichnet, dass auf dem Walzenkörper (16) für die seitliche Führung der einzelnen Ringsegmente (18) eines einzelnen Pakkerringes (17) dem Querschnitt derselben entsprechend ausgebildete sattelartige Bügel (24) o.dgl. aufgeschweisst sind.

7. Kornsämaschine nach den Ansprüchen 1 bis 6, dadurch gekennzeichnet, dass die geteilten Packerringe (17) unter Einbeziehung der Halteböcke (19) und Bügel (24) in einem relativ geringen Abstand zueinander auswechselbar auf dem Walzenkörper (16) aufgeschraubt sind.

8. Kornsämaschine nach den Ansprüchen 1 bis 7, dadurch gekennzeichnet, dass die beidseitig an den Packerringen (17) angreifenden Abstreifer (25) am oberen Ende der hinteren Schräge des Rahmengestells (11) befestigt sind.

9. Kornsämaschine nach den Ansprüchen 1 bis 8, dadurch gekennzeichnet, dass in Fahrtrichtung hinter der Rillenwalze (12) ein die Rillen zudeckender Striegel (26) o.dgl. angeordnet ist.

**Revendications.**

1. Semoir avec compacteur à rouleau qui présente un rouleau de sillon (12) suspendu dans un châssis et formé d'un corps de rouleau cylindrique entraîné (16) sur lequel sont disposés côte à côte des anneaux compacteurs (17), caractérisé par le fait que chacun des anneaux compacteurs (17) est formé de segments d'anneau (18) et que pour leur fixation détachable au corps de rouleau (16) celui-ci présente des supports (19) en nombre correspondant à celui des segments d'anneau (18), s'écartant du corps en direction radiale et qui sont munis d'un filetage intérieur dans lequel est vissée une vis (21) dont la tête peut s'insérer ou s'enfoncer dans le segment d'anneau considéré (18).

2. Semoir selon la revendication 1, caractérisé par le fait que sur le corps de rouleau (16), un support (19) est disposé de façon fixe pour chaque segment d'anneau (18).

3. Semoir selon la revendications 1 et 2, caractérisé par le fait que les segments d'anneau (18) présentent à un côté frontal un décrochement (22) dirigé vers le bas et vers l'intérieur en raison de l'épaisseur de la matière.

4. Semoir selon les revendications 1 à 3, caractérisé par le fait que le segment d'anneau (18) présente, à l'extrémité opposée au décrochement (22), un creux (23) dans lequel la tête de la vis (21) s'applique, en passant par la perforation de passage destinée à celle-ci.

5. Semoir selon les revendications 1 à 4, caractérisé par le fait que les supports (19) sont formés de métal, sous forme de cames, de blocs ou de plaques profilées et forment avec le corps de rouleau (16) par soudage ou moyen similaire, un ensemble non détachable.

6. Semoir selon les revendications 1 à 5, caractérisé par le fait que sur le corps de rouleau (16) sont soudés, pour le guidage latéral des différents segments d'anneau (18) d'un anneau compacteur individuel (17), des étriers en forme de selle (24) ou éléments similaires, correspondant à la section des segments.

7. Semoir selon les revendications 1 à 6, caractérisé par le fait que les anneaux compacteurs divisés (17) sont vissés sur le corps de rouleau (16) avec inclusion des supports (19) et des étriers, avec un espacement mutuel relativement réduit.

8. Semoir selon les revendications 1 à 7, caractérisé par le fait que les racleurs (25) s'appliquant des deux côtés aux anneaux compacteurs (17) sont fixés à l'extrémité supérieure du biseau postérieur du châssis (11).

9. Semoir selon les revendications 1 à 8, caractérisé par le fait que derrière le rouleau de sillon (12), dans le sens de la marche, est disposée une étrille (26) ou un élément similaire, recouvrant les sillons.

**Claims**

1. Corn sowing machine with a roller packer having a grooved roller (12) which is suspended in a frame (11) and comprises a driven, cylindrical roller body (16) having packer rings (17) disposed thereon adjacent one another, characterised in that each of the packer rings (17) is formed by annular segments (18) and, in order for the packer rings to be detachably mounted on the roller body (16), said roller body has a number of retaining blocks (19) which protrude radially from the roller body and are provided with an internal thread (20), the number of retaining blocks corresponding to the number of annular segments (18), and a screw (21) is screwed into said internal thread, the head of said screw being inserted or sunk in the respective annular segment (18).

2. Corn sowing machine according to claim 1, characterised in that a retaining block (19) is fixedly disposed on the roller body (16) for each annular segment (18).

3. Corn sowing machine according to claims 1 and 2, characterised in that the annular segments (18) are provided, at one leading end, with an offset portion (22) which extends downwardly and inwardly into the material.

4. Corn sowing machine according to claims 1 to 3, characterised in that, on the end remote from the offset portion (22), the annular segment (18) has a recessed portion (23) which accommodates the head of the screw (21) through the intermediary of the through-bore for said screw (21).

5. Corn sowing machine according to claims 1 to 4, characterised in that the metal retaining blocks (19) are constructed in the form of cams, blocks or profiled plates and, by means of welding or the like, form a non-detachable unit with the roller body (16).

6. Corn sowing machine according to claims 1 to 5, characterised in that saddle-shaped clamps (24) or the like are welded to the roller body (16) for the lateral guidance of the individual annular segments (18) of one individual packer ring (17) and are constructed to correspond to the cross-section of said annular segments.

7. Corn sowing machine according to claims 1 to 6, characterised in that the divided packer rings (17), with the inclusion of the retaining blocks (19) and clamps (24), are screw-connected to the roller body (16) in an interchangeable manner at a relatively short distance from one another.

8. Corn sowing machine according to claims 1 to 7, characterised in that scrapers (25), which act upon both sides of the packer rings (17), are mounted on the upper end of the rear diagonal of the frame (11).

9. Corn sowing machine according to claims 1 to 8, characterised in that when viewed in the direction of travel, a rake (26) or the like, which covers up the grooves, is disposed the grooved roller (12).

Fig. 1

Fig. 2

Fig. 5

Fig. 3

Fig. 4

9